# EUROPEAN PATENT APPLICATION

(11) **EP 0 876 999 A2**
(43) Date of publication of application: **11.11.1998**
(21) Application number: 98500110.6
(22) Date of filing: 07.05.1998
(51) Int. Cl.: C02F 1/52, C02F 1/72, C02F 1/76, C02F 9/00

(54) **Water treatment facility for recycling and decalcification of water in a car wash without drainage**

(30) Priority: 07.05.1997 ES 9700979
(71) Applicant: Chamorro Sanchez, Juan Matias, 18005 Granada (ES)
(72) Inventor: Chamorro Sanchez, Juan Matias, 18005 Granada (ES)
(74) Representative: Carpintero Lopez, Francisco

(57) **Abstract**

The Facility comprises a tank for the reception of crude water (1), at least an intermediate tank (2), primary (3), secondary (4) and tertiary (5) conditioners, together with an equipment for the treatment of mud, others for the metering of reactive agents, and a laboratory equipment. In the tank (1), the crude water (9) is subjected to a decantation, precipitation and chemical flocculation process, in the intermediate tanks (2) traces of oils and greases are eliminated and by means of the conditioners, the water is filtered, decalcified and oxygenated. The Facility allows 90-95% of the water employed to be reused, does not produce drainage and the mud is extracted in mineralized form, due to which it does not cause any detrimental effect to the Environment.

## Description

### SCOPE OF THE INVENTION

This invention refers to a water treatment Facility appropriate for the recycling and decalcification of the water of a car wash, without drainage.

### BACKGROUND OF THE INVENTION

Facilities for washing motorcars, or car washes, in addition to the elevated water consumption, around 200 litres of water per motorcar washed, or around 400 litres of water per motorcar with washing of the parts underneath, generate a great amount of contaminants derived from the materials used for the cleaning of the motorcars, which, if they are not treated correctly, constitute a potential source of environmental pollution.

In order to reduce the water consumption in the car washes, facilities for the recycling of the water have been provided, applied to a car wash, which permits the reuse of a more or less important amount of water. These facilities retain the dirt in the actual equipment, though, after the equipment has been washed, the dirt is poured into the collector. As a consequence of all this, a more or less important amount of water is obtained for reuse, though the Environment continues being polluted and it increases the cost of the car washes since they require purification stations of residual waters (EDAR).

With the coming in force in Spain of RD 484/95 of the 7^{th} April, The Official Organisations demand the installation of car washes which do not contaminate the Environment and declare the drainage as corruptive with the sanctions foreseen in the Law of ecological offence. In consequence, in order to comply with the standards in force, car washes which generate drainage, shall put into use a facility for recycling water and shall ensure that the drainage which is generated, complies at its output, with the provisions in the Law of Waters, since otherwise, their drainage would not be authorized and the facility would require an EDAR.

Therefore, the need exists for the provision of a facility which permits the reuse of the water consumed in a car wash which exceeds the previously indicated disadvantages. This objective may be reached by means of the design and the development of a facility provided by this invention, which consists of a facility for the treatment of water, appropriate for the recycling and decalcification of the water in a car wash which does not generate drainage (without drainage), with which it attains, not only the reduction of the consumption of water but also prevents the installation of an EDAR, all the above with favourable influence on the Environmental and economical aspects of the car wash.

### BRIEF DESCRIPTION OF THE FIGURES

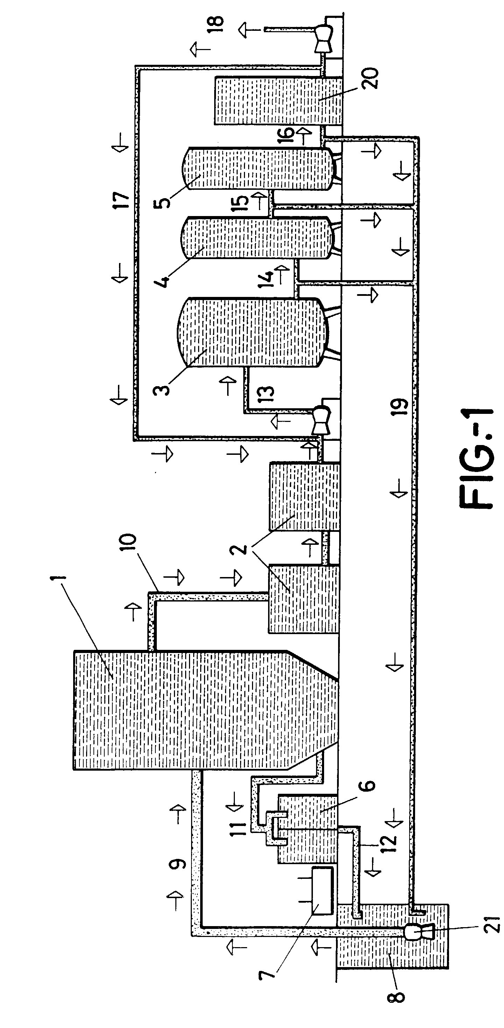

Figure 1 shows the diagram of a water treatment facility for recycling and decalcification of the water in a car wash, without drainage, provided by this invention.

### DETAILED DESCRIPTION OF THE INVENTION

A water treatment facility is provided which is appropriate for the recycling and decalcification of the water in a car wash, without drainage. In order to facilitate the comprehension of the nature of the present invention. The facility which is the object of the same is described with reference to the figure which is enclosed with this Specification. As can be observed in Figure 1, said facility comprises:
- a tank for the reception of the crude water (1);
- at least, one intermediate tank (2);
- a primary conditioner (3);
- a secondary conditioner (4); and
- a tertiary or completing conditioner (5).

The facility is completed with an equipment for treating mud, an equipment for the metering of reactive agents, a laboratory equipment and an electric equipment.

The tank for the reception of the crude water (1) is a tank which is appropriate for collecting the crude water (9) coming from the car wash, particularly, of the bin (8) for the collection of the waters from the wash tunnel. In this tank (1), the water (9) received is subjected to a process of decantation, precipitation and chemical flocculation by means of the use and the metering of the appropriate conventional reactive agents. The flocculated and cleared water (10) exits through the upper part of said tank (1) and the mud (11) is retained in the same and extracted by any appropriate means, such as by means of an elastic deformation membrane valve. The shape, dimensions and materials of the tank for the reception of the crude water (1) may vary depending on the requirements and dimensions of the car wash. In a particular embodiment, said tank (1) is constituted by steel sheets.

The intermediate tank (2) collects the flocculated and cleared water (10) coming from the tank for the reception of the crude water (1) and serves to adjust the water level and to store the necessary water for the water conditioners and to eliminate the small traces of oils and greases, etc., which might come out of the tank (1). The shape, dimensions and materials of the intermediate tank (2) may be variable. On occasions, a set of at least, two intermediate tanks may be used. In a particular embodiment, the tank (2) is constituted by polyester.

The object of the primary conditioner (3) is to eliminate the colloids in suspension in the water, prevent the formation of micro contaminants and reduce the hardness of the water to the desired values. To achieve this, this conditioner (3) acts as filtrator-decalcificator either separately or else simultaneously. An example of said water conditioner (3) is a filter made up of a bed formed by a mixture of sand and cationic resin, such as the one described in Spanish Patent No. P9402435. The use of a cationic resin permits the reduction of the hardness of the water by ionic interchange up to the desired level but without increasing the conductivity.

The object of the secondary conditioner (4) is to clear the water coming from the primary conditioner (3). To achieve this, a water conditioner-oxygenator may be used, which consists of a filter comprised by a bed mixed with active carbon which externally incorporates a Venturi, of the type described in the Spanish Patent Application No P9500152.

The object of the tertiary or completing conditioner (5) is to eliminate totally or partially, the micro contaminants which are present in the water (15) coming for the secondary conditioner (4) and to correct possible leaks of the previous equipments. The appropriate equipment for the embodiment of this treatment may present the same technical characteristics as the secondary conditioner (4). In a particular embodiment, the tertiary conditioner (5) is a mixture of the primary (3) and the secondary (4) conditioners, and comprises a bed with a mixture of sand, active carbon and cationic resins. At the output of the tertiary conditioner (5), the water recovers its characteristics and is sterilized by means of an appropriate treatment, for example, with a sodium hypochlorite solution.

The mud (11) retained in the tank (1) is extracted and lead to drying beds or plots (6) constituted by a layer of siliceous sand extended over a gravel support.

So as to meter the reactive agents necessary for the flocculation and sterilization of the water, appropriate conventional metering pumps (7) may be used,

The laboratory equipment comprises a kit for measuring the hardness of the water and a kit to determine the chlorine and the pH with its corresponding reactive agents, for example, orthotolidine and phenol red, for the colorimetric determination. Additionally, this equipment is provided with a comparator housing.

The electric equipment is comprised of a water-ight control rack, differential relays, contactors, relays, level probes, timers, etc., with the purpose of obtaining a totally automatic operation of the facility.

In general, the residues produced by the facility may be summed up by:
- drainage: zero; and
- mud: extracted in mineralized form.

The facility requires a maintenance which depends on the number of motorcars washed and on the time of year. In general, for a washing of 1.000 motorcars/month, the maintenance operations are limited to washing the conditioners once a week. The time employed is of approximately ten minutes. The rest of the equipments work automatically. It is advisable to perform the washing of the facility manually. Likewise, it is advisable to conduct the washing operations of the equipments when a great abundance of motorcars is predicted.

The invention also provides a method for recycling and decalcification of the water of a car wash without drainage, which comprises the use of the previously indicated facility.

As can be observed in Figure 1, the crude water (9) coming from the bin (8) for the collection of the waters coming from the wash tunnel, is impulsed by a pump (21) to the tank (1) where it is subjected to a decantation, precipitation and chemical flocculation process. The dosage of the reactive agents necessary for the flocculation and sterilization of the water is conducted by means of appropriate metering pumps (7). The flocculated and cleared water (10) exits through the upper part of the tank (1) and is lead to the intermediate tanks (2) which are appropriate for adjusting the level of the water to store the necessary water for the conditioners (3), (4) and (5) of the water and to eliminate the small traces of oils and greases, etc., coming from the tank (1). The degreased water (13) coming from the tanks (2) is impulsed by means of a pump to the primary conditioner (3) where it is subjected to a filtration-decalcification process, together or separately, with the purpose of eliminating the colloids in suspension, prevent the formation of micro contaminants and reduce the hardness of the water to obtain the desired values. Part of the water (14) coming from the primary conditioner (3) is recirculated to the bin (8) whilst the rest feeds a secondary conditioner (4) where it is subjected to a clearing and oxygenation process. The output water (15) from the secondary conditioner (4) is divided into two currents, one of them is recirculated to the bin (8) whilst the other feeds a tertiary conditioner (5) where it is subjected to a completing process to remove totally or partially, the micro contaminants presents in the water (15) coming from the secondary conditioner (4) and to correct the possible leaks of the previous equipments. The water (16) coming from the tertiary conditioner (5) has recovered its characteristics. Part of the water (16) is recirculated to the bin (8) whilst the remainder is sterilized by means of an appropriate treatment, for example, by means of a sodium hypochlorite solution of variable concentration, for example of 160 grammes of chlorine per litre, impulsed by a metering pump until a concentration of 1 ppm (part per million) is obtained. The treated water can be stored in a tank (20) before its exit (18) to the wash tunnel when necessary. The tank (20) can also contain washing water from the conditioners (3), (4), and (5). One part of the output water (17) from the tank (20) is used in the wash circuit of the conditioners (3), (4), and (5). The partial currents coming from the waters (14), (15) and (16) which are recirculated to the bin (8) may be recollected in one single conduit (19).

The mud (11) extracted automatically or manually by the bottom part of the tank (1) is lead to mud drying plots or beds (6), where it is dried, mineralized and extracted manually or automatically. The amount of mud collected depends on the number of washings (1 gramme of mud is approximately generated per motorcar washed). The thickness of the mud on the bed shall not exceed 35 cm. When the mud (11) has become sufficiently compacted it is extracted with a spade. The obtained mud does not produce bad smells. The water (12) coming from the drying of the mud is recirculated to the bin (8).

By means of the facility provided by this invention, an "ecological washing" is obtained, that is to say, a facility for the recycling or reuse of water which, applied to a car wash, has zero drainage since:
- the greater part of the water used, both in the washing of motorcars and in the washing of the equipments, returns to the same place to which the water coming from the washing of the motorcars is poured, that is to say, to the bin placed below the washing tunnel, and
- the mud produced, after drying, is extracted in mineralized form.

As a consequence of this, approximately 90-95% of the water used is recovered, since only that which evaporates, and the small amount of water which is carried away by the motorcars is lost. Due to the absence of drainage, no detrimental effect to the Environment is caused.

The following example serves to illustrate a particular embodiment of a facility for the treatment of water, which is appropriate for recycling and decalcifying the water of a car wash with zero drainage provided by this invention and shall not be considered as limitative of the scope of the same.

### EXAMPLE 1

### Design of a facility without drainage

A facility has been designed for the treatment of water which is appropriate for the recycling and decalcification of water from a car wash, without drainage, taking into account the characteristics of the crude water, of the water coming from the wash tunnel and that of the wash tunnel.

The measures expressed as ppm, are equal to parts per million, equal to a milligramme per litre or equal to a gramme per cubic meter.

### 1.-Characteristics of the crude water

| | |
|---|---|
| Silica turbidity | <30 ppm SiO₂ |
| Colour | <20 ppm Pt |
| TAF (Free strong acid contents) | 0 mg/L |
| Chlorine | Negative |
| TH (Hydrotrimetric degree) | 460 mg/L |
| pH | 8,32 |
| TM (Magnesium hardness or magnesium hydrotrimetric degree) | 60 mg/L |
| TAC (Complete alkalimetric degree) | 280 mg/L |
| SAF (Global contents in strong acid salts) | 120 mg/L |
| Fe | 0,1 mg/L |
| Organic material | 2,1 mg/L O₂ |
| Cations: | |
| Ca²⁺ | 300 ppm |
| Mg²⁺ | 120 ppm |
| Na⁺ | 40 ppm |
| Total | 460 ppm |
| Anions: | |
| CO₃H⁻ | 200 ppm |
| CO₃²⁻ | 100 ppm |
| SO₄²⁻ | 160 ppm |
| Total | 460 ppm |
| Conductivity | 1.801 microSiemens |
| Origin of the water | Town council network |
| Temperature | 24°C |

### 2.- Characteristics of the water coming from the wash tunnel

| | |
|---|---|
| pH | 5-10 |
| Solids in suspension | 2.756 ppm |
| DQO (O₂ chemical demand) | 3.504 ppm |
| Oils and greases | 926 ppm |
| Detergents (such as lauryl-sulfates [LAS]) | 224.400 ppm |
| Turbidity | 2.600 ppm |
| DBO5 (Standard O₂ biological demand) | 230 ppm |

### 3.- Characteristics of the wash tunnel

| | |
|---|---|
| Model | Automatic |
| No. of units | One |
| Maximum washing capacity | 60 units/hour |
| Washing of underneath parts | Positive |
| Water consumption per motorcar | 200 L |
| Washing of lorries | Negative |
| Manual washing with compressed water projector | Positive |
| Water consumption per motor-car with washing of underneath parts | 400 L |

Based on the characteristics of the previously indicated crude water, the water coming from the washing tunnel and that of the washing tunnel, a facility for the treatment of water was designed which was appropriated for recycling and decalcification of the water of a car wash with zero drainage which comprised all the following equipments:

### Tank for the reception of crude water (1)

| | |
|---|---|
| Material | Steel sheet |
| Volume | 14,25 m³ |
| Dimensions | 4.500 x 2.000 mm diameter |

For the retention and extraction of mud, an elastic deformation membrane PIV (PIC-dosapro Milton Roy) valve may be used.

### Intermediate tank (2)

| | |
|---|---|
| Material | Polyester |
| Volume | 1.152 1 |
| Dimensions | 800 X 350 mm diameter |
| Number of tanks | 2 of 576 L |

### Primary conditioner (3)

Filter comprised of a bed with a mixture of sand and a cationic resin, such as the one described in Spanish Patent No. P9402435, working in a closed circuit.

| Characteristics: | |
|---|---|
| Model | CH-32 |
| Manufacturer | Applicant |
| Material | Steel sheet |
| Height | 2.000 mm |
| Diameter | 600 mm |
| Maximum work pressure | 5,1 x 10⁵ bar (5kg/cm²) |
| Piping diameter | 3,81 cm (1,5") |
| Number of valves | 1 Central Hay Ward |
| Manometer | 0-5,1 x 10⁵ bar |
| Regeneration | Manual |
| Consumption of NaCl (per regeneration) | 5 kg |
| Pump power | 0,5 C.V. |
| Flow | 12.000 L/hr |
| Manometric height | 20 m. C.A. |
| Ion interchanger volume | 30 L |
| TH of the treated water | mg/L to the pre-set value, between 2530 mg/L (MAX) and 0 mg/L |

### Secondary conditioner (4)

Filter comprised by a bed with a mixture of Hydrafin® active carbon (Bayer), with an absorption power between 950 and 1.050 m²/g of total surface (N₂ method B.E.T.), which is incorporated externally with a Venturi, such as the one described in the Spanish Patent of application No. P9500152

| Characteristics: | |
|---|---|
| Model OXYGENATING CONDITIONER | Model CH-12 |
| Manufacturer | Applicant |
| Material | Steel sheet |
| Total height | 2.000 mm |
| Diameter | 500 mm |
| Maximum work pressure | 5,1 x 10⁵ bar |
| Piping diameter | 3,81 cm |
| Number of valves | 1 Central Hay Ward |
| Manometer | 0-5,1 x 10⁵ bar |
| Activation | Manual |
| Control | Optic |
| Flow | 12.000 L/hr |
| Reclik-Oxygen-W volume | 180 L |

### Tertiary conditioner (5)

Bed with a mixture of sand, Hydrafin® active carbon (Bayer) and cationic resins, with similar characteristics to those of the secondary conditioner (4).

### Treatment of mud

| | |
|---|---|
| Number of units | 1 |
| Dimensions | 1.200 x 400 x 600 mm |
| Material | Steel sheet |
| Bleedings | Automatic |
| Activation | Timer |

### Dosage pumps of the reactive agents

| | |
|---|---|
| Model | DC-X-21 |
| Manufacturer | Dosapro Milton Roy |
| Number of heads | 2 |
| Type | Stainless steel piston |
| Storage tanks | 2 |
| Volume of each tank | 125 L |
| Power | 100 W |
| Voltage | 220 V monophasic |

For the flocculation of water, ferric chloride was used as flocculant, whilst sodium hypochlorite (160 g Chlorine/L) was used for the sterilization of the water.

## Claims

1. Water treatment facility for recycling and decalcification of the water of a car wash without drainage, which comprises:
- a tank for the reception of the crude water (1);
- at least, one intermediate tank (2);
- a primary conditioner (3);
- a secondary conditioner (4); and
- a tertiary or completing conditioner (5).

2. A facility according to claim 1, in which said tank (1) for the reception of the crude water is a tank in which the crude water (9) which is received, is subjected to a decantation, precipitation and chemical flocculation process.

3. A facility according to claim 1, which comprises two intermediate tanks (2).

4. A facility according to claim 1, in which said intermediate tanks (2) serve to adjust the water level, to store the water necessary for the conditioners of the water and to eliminate the small traces of oils and greases which might come out from the tank (1).

5. A facility according to claim 1, in which said primary conditioner (3) permits the elimination of the colloids in suspension in the water, to prevent the formation of micro contaminants and to reduce the hardness of the water to obtain the desired values.

6. A facility according to claim 1, in which said primary conditioner (3) comprises filtration-decalcification means.

7. A facility according to claim 6, in which said primary conditioner (3) comprises filtration-decalcification means which operate separately.

8. A facility according to claim 6, in which said primary conditioner (3) comprises filtration-decalcification means which operate simultaneously.

9. A facility according to claim 1, in which the secondary conditioner (4) permits the clearing of the water coming from the primary conditioner (3).

10. A facility according to claim 9, in which the secondary conditioner (4) is a water conditioner-oxygenator.

11. A facility according to claim 1, in which the tertiary conditioner (5) permits the total or partial elimination of the micro contaminants present in the water (15) coming from the secondary conditioner (4).

12. A facility according to claim 11, in which the tertiary conditioner (5) is a water conditioner-oxygenator.

13. A facility according to claim 1, which additionally comprises sterilization means of the water coming from said tertiary conditioner (5).

14. A facility according to claim 13, in which said sterilization means of the water coming from said tertiary conditioner (5) comprises a sodium hypochlorite solution.

15. A facility according to claim 1, which additionally comprises an equipment for the treatment of mud.

16. A facility according to claim 15, in which said equipment for the treatment of mud comprises drying plots or beds (6) constituted by a layer of sand extended over a gravel support.

17. A facility according to claim 1, which additionally comprises an equipment for the metering of the reactive agents necessary for the flocculation and sterilization of the water, comprises appropriate metering pumps (7).

18. A facility according to claim 1, which additionally comprises a laboratory equipment which comprises a kit for measuring the hardness of the water and a kit to determine the chlorine and the pH with their corresponding reactive agents.

19. A facility according to claim 1, which additionally comprises an electric equipment which permits a totally automatic operation of the facility.

20. A method for the recycling and the recalcification of the water of a car wash, without drainage, which comprises the use of a water treatment facility for recycling and decalcification of the water of a car wash, without drainage, according to any of the claims 1 through 19.
